## Europäisches Patentamt

## European Patent Office

## Office européen des brevets

(19)

(11) Veröffentlichungsnummer: **0 071 670**
**B1**

(12) # EUROPÄISCHE PATENTSCHRIFT

(45) Veröffentlichungstag der Patentschrift:
**19.02.86**

(51) Int. Cl.⁴: **B 60 N 3/00**

(21) Anmeldenummer: **81106889.9**

(22) Anmeldetag: **03.09.81**

(54) **Fahrgastsitz für ein Personenfahrzeug.**

(30) Priorität: **31.07.81 DE 3130225**

(43) Veröffentlichungstag der Anmeldung:
**16.02.83 Patentblatt 83/7**

(45) Bekanntmachung des Hinweises auf die Patenterteilung:
**19.02.86 Patentblatt 86/8**

(84) Benannte Vertragsstaaten:
**BE DE FR GB IT NL SE**

(56) Entgegenhaltungen:
**DE - A - 2 057 329**
**DE - A - 2 312 481**
**DE - B - 1 080 582**
**DE - C - 363 197**
**FR - A - 780 246**

(73) Patentinhaber: **M.A.N. MASCHINENFABRIK AUGSBURG-NÜRNBERG Aktiengesellschaft, Dachauer Strasse 667 Postfach 50 06 20, D-8000 München 50 (DE)**

(72) Erfinder: **Schäfer, Ortwin, Wilhelm-Leuschner-Strasse 9, D-6086 Riedstadt (DE)**

## Beschreibung

Die Erfindung betrifft einen Fahrgastsitz für ein Personenfahrzeug nach dem Oberbegriff des Anspruchs 1.

Ein derartiger Fahrgastsitz mit einem Ablagetisch ist aus der DE-A 2 312 481 bekannt, bei dem ein den Tisch haltendes Lager als Kulissenlager ausgebildet ist, derart dass zum Verschwenken des Tisches aus der Gebrauchslage dieser zuerst angehoben werden muss. Die Handhabung des Ablagetisches ist dadurch für einen sitzenden Fahrgast nicht sehr bequem.

Der Erfindung liegt die Aufgabe zugrunde, einen Fahrgastsitz mit einem Ablagetisch zu schaffen, bei dem der Ablagetisch leicht und bequem zu bedienen ist.

Die Aufgabe wird erfindungsgemäss durch die im Anspruch 1 gekennzeichneten Merkmale gelöst.

Hierdurch ist ein Tisch geschaffen, der nicht wie bei der bekannten Einrichtung aus der Gebrauchslage zuerst angehoben werden muss, bevor er hinunter in die Verstaulage geschwenkt werden kann. Der erfindungsgemässe Ablagetisch ist ganz einfach direkt zu verschwenken, wodurch die Handhabung besonders einfach ist. Ausserdem ist dadurch eine grössere Sicherheit für den Fahrgast gegeben, wenn dieser bei einer starken Bremsung nach vorne geschleudert wird. Durch die sofortige Schwenkmöglichkeit des Tisches wird dieser nämlich bei der Vorwärtsbewegung des Fahrgastes im Sitz mit diesem nach vorne bewegt. Nach der Ausführung gemäss dem Stand der Technik dagegen bleibt der Tisch in seiner Gebrauchslage verankert.

Weitere Vorteile der Erfindung sind darin zu sehen, dass sich der Ablagetisch in seiner Gebrauchslage sehr nahe am Fahrgast befinden kann und dass eine besonders platzsparende Verstaulage des Ablagetisches möglich ist. In seiner Verstaulage beeinträchtigt der Ablagetisch weder die Sitzlänge noch die sonstigen Raumverhältnisse. Darüber hinaus ist der Bauaufwand für die Anbringung eines Ablagetisches an einen Fahrgastsitz sowohl bei serienmässiger Ausrüstung als auch bei Nachrüstung gering. Es kann in jedem Fall von üblichen Fahrgastsitzen ausgegangen werden, wodurch sich die Herstellungskosten erheblich niedriger halten lassen.

Bevorzugte Weiterbildungen eines erfindungsgemässen Fahrgastsitzes sind in den Patentansprüchen 2 bis 5 offenbart. Anhand der beigefügten Zeichnung wird ein Ausführungsbeispiel der Erfindung erläutert.

In der Zeichnung zeigt:

Fig. 1 einen Fahrgastsitz mit Ablagetisch für Omnibusse in Seitenansicht und

Fig. 2 eine Draufsicht auf den Ablagetisch aus Fig. 1.

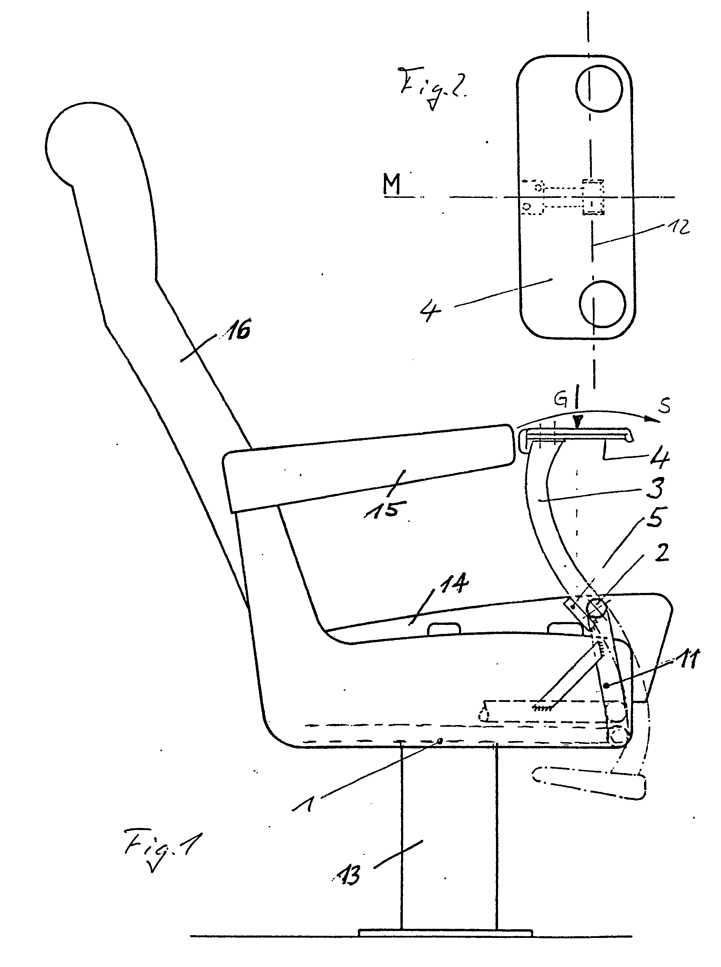

Der in Fig. 1 in Seitenansicht dargestellte Omnibussitz weist ein tragendes Sitzgestell 1 auf, welches im wesentlichen auf einem Fuss 13 ruht.

Auf dem Sitzgestell 1 sind ein Polstersitz 14, eine Rückenlehne 16 und Armlehnen 15 befestigt. Seitlich am Sitzgestell 1 ist ein Lagerbock 11 befestigt, an dessen oberem Ende ein Schwenklager 2 mit horizontaler und quer zur Sitzrichtung des Fahrgastes liegender Schwenkachse 12 angeordnet ist. In diesem Schwenklager 2 ist das untere Ende eines bogenförmig gekrümmten Tischbeines 3 schwenkbar gelagert, auf dessen oberem Ende eine Tischplatte 4 verschraubt ist. Wie in der Seitenansicht gemäss Fig. 1 erkennbar, liegt die Befestigungsstelle des Tischbeins 3 mit der Tischplatte 4 bezogen auf die Sitzrichtung ausserhalb der Mitte der Tischplatte 4. Ein Endanschlag 5, der im Bereich des Schwenklagers 2 am Lagerbock 11 befestigt ist, sorgt für eine eindeutige Betriebslage des Schwenktisches. Dabei ist die Tischplatte 4 bezüglich des Schwenklagers 2 so positioniert, dass bei einer Belastung des Tisches mit einem Gewicht G ein Drehmoment um das Schwenklager 2 erzeugt wird, welches eine Abstützkraft auf den Endanschlag 5 bewirkt.

Ist der Ablagetisch als Einzeltisch für einen Fahrgast vorgesehen, so erstreckt sich die Tischplatte 4, ausgehend vom oberen Ende des Tischbeins 3 in Richtung zur Mitte des Fahrgastsitzes hin. In diesem Fall weist sie, ausgehend von der in Fig. 2 eingezeichneten Mittelachse M etwa halbe Grösse auf wie die dort gezeigte Tischplatte. Die in Fig. 2 dargestellte Tischplatte ist für einen Doppelsitz geeignet, wie er in Grossraumpersonenfahrzeugen üblich ist. Wie aus Fig. 2 erkennbar, erstreckt sich die Tischplatte symmetrisch von der Mittelachse M aus bzw. vom Tischbein 3 aus nach beiden Seiten zu jedem Fahrgastsitz hin.

Die Verstaulage des Schwenktisches ist in Fig. 1 mit strichpunktiertem Linienzug eingezeichnet. Der Bogenpfeil 5 gibt die Schwenkbewegung aus der Betriebslage in die Verstaulage an. Durch die bogenförmige Krümmung des Tischbeins 3 und die aussermittige Befestigung der Tischplatte 4 auf dem Tischbein 3 wird nur sehr geringer Stauraum benötigt und der in Verstaulage befindliche Ablagetisch steht mit seiner Aussenkontur nur wenig über die Kontur der Unterseite des Fahrgastsitzes hinaus, so dass der Fussraum der Fahrgäste nicht bzw. nur unwesentlich eingeschränkt wird.

Um ein unbeabsichtigtes Herunterschwenken bzw. Herunterfallen des Ablagetisches aus einer Zwischenposition oder auch aus seiner Betriebslage sicher zu vermeiden, weist das Schwenklager 2 eine Reibpaarung auf, die ein ausreichend grosses Reibmoment aufbringt, um den Tisch in jeder Schwenkstellung zu halten. Zusätzlich kann im Schwenklager 2 für die Verstaulage des Tisches eine Kugelrast üblicher Bauart vorgesehen sein.

Das Tischbein des Schwenktisches ist in Metall ausgeführt, während die Tischplatte 4 aus Polyurethanschaum, wie Integralhartschaum besteht, wodurch sie strapazierfähig ist und bei geringem Aufwand eine stark strukturierte Oberfläche aufweisen kann. So ist es z.B. möglich, kreisförmige Vertiefungen zum Abstellen von Bechern oder Flaschen vorzusehen, wie es in Fig. 2 angedeutet ist.

## Patentansprüche

1. Fahrgastsitz für ein Personenfahrzeug, insbesondere ein Grossraumpersonenfahrzeug, mit einem seitlich am Sitzgestell (1) befestigten einbeinigen Ablagetisch (3, 4), der aus einer Gebrauchslage im Hantierbereich des sitzenden Fahrgastes in eine Verstaulage unterhalb des Sitzes wegklappbar oder wegschwenkbar ist, wobei die Halterung des Ablagetisches (3, 4) am Sitzgestell (1) durch ein am unteren Ende des Tischbeines (3) vorgesehenes Schwenklager (2) mit horizontaler und quer zur Sitzrichtung des Fahrgastes liegender ortsfester Schwenkachse (12) und einen ebenfalls ortsfesten, in Sitzrichtung hinter der Schwenkachse (12) liegenden Endanschlag (5) erfolgt und wobei eine Belastung des Ablagetisches (3, 4) in seiner Gebrauchslage eine Abstützkraft auf den Endanschlag (5) hervorruft, dadurch gekennzeichnet, dass die Tischplatte (4) zu dem als ausschliessliche Schwenkverbindung ausgebildeten Schwenklager (2) so positioniert ist, dass die Resultierende (G) einer auf den Ablagetisch (3, 4) in seiner Gebrauchslage aufgebrachten vertikalen Belastung in Sitzrichtung hinter der Schwenkachse (12) durchführt und die Abstützkraft auf den Endanschlag (5) hervorruft und dass das Schwenklager (2) eine Reibpaarung aufweist, die zumindest im Bereich der Gebrauchslage ein ausreichend grosses Reibmoment aufbringt, um den Ablagetisch (3, 4) in seiner Gebrauchslage zu halten.

2. Fahrgastsitz nach Anspruch 1, dadurch gekennzeichnet, dass die Reibpaarung ein ausreichend grosses Reibmoment aufbringt, um den Tisch in jeder Schwenkstellung zu halten.

3. Fahrgastsitz nach den Ansprüchen 1 oder 2, dadurch gekennzeichnet, dass das Tischbein (3) bogenförmig gekrümmt ist.

4. Fahrgastsitz nach den Ansprüchen 1 bis 3, dadurch gekennzeichnet, dass für die Verstaulage des Ablagetisches (3, 4) im Schwenklager (2) eine Kugelrast vorgesehen ist.

5. Fahrgastsitz nach den Ansprüchen 1 bis 4, dadurch gekennzeichnet, dass er ein Doppelsitz ist, das Tischbein (3) in der Mitte zwischen den beiden Sitzflächen am Sitzgestell (1) gelagert ist und die Tischplatte (4) des Ablagetisches (3, 4) sich vom Tischbein (3) ausgehend nach beiden Seiten zu jedem Fahrgastsitz hin erstreckt.

## Claims

1. A passenger seat for a passenger vehicle, more particularly a large capacity passenger vehicle, having a single-strut table (3, 4) secured laterally to the seat frame (1), said table being tippable or pivotable from a position of use within reach of the sitting passenger into a stowage position beneath the seat, the table (3, 4) being mounted on the seat frame (1) by means of a pivot (2) provided at the bottom end of the table strut (3) and having a horizontal fixed pivot axis (12) situated transversely of the passenger's sitting direction and a likewise fixed end stop (5) situated behind the pivot axis (12) as considered in the sitting direction, a load applied to the table (3, 4) in its position of use producing a reaction on the end stop (5), characterised in that the table top (4) is so positioned in relation to the pivot (2), which is constructed solely as a pivot connection, that the resultant G of a vertical load applied to the table (3, 4) in its position of use leads through behind the pivot axis (12) as considered in the sitting direction and produces the reaction on the end stop (5) and in that the pivot (2) has a friction couple which, at least in the region of the position of use, applies a moment of friction sufficient to hold the table (3, 4) in its position of use.

2. A passenger seat according to claim 1, characterised in that the friction couple applies a moment of friction sufficient to hold the table in any position to which it has been pivoted.

3. A passenger seat according to claim 1 or 2, characterised in that the table strut (3) is curved to be arcuate.

4. A passenger seat according to claims 1 to 3, characterised in that a ball detent is provided in the pivot (2) for the stowage position of the table (3, 4).

5. A passenger seat according to claims 1 to 4, characterised in that it is a double seat, the table strut (3) is mounted on the seat frame (1) in the middle between the two seat surfaces and the tabletop (4) extends to either side from the strut (3) at each passenger seat.

## Revendications

1. Siège de passager pour véhicule de voyageurs, notamment pour véhicule de voyageurs de grande capacité, avec une tablette (3, 4) à une jambe reliée latéralement au châssis de siège (1), cette tablette pouvant être déplacée par rabattement ou pivotement, d'une position d'utilisation dans le domaine de manipulation du passager assis, à une position d'effacement au-dessous du siège, le maintien de la tablette (3, 4) sur le châssis de siège (1) étant assuré par un palier de pivotement (2) prévu à l'extrémité inférieure de la jambe de tablette (3) avec un axe de pivotement (12) horizontal à position fixe et placé transversalement à la direction d'assise du passager et par une butée d'extrémité (5) également à position fixe placée derrière l'axe de pivotement (12) dans la direction d'assise, le chargement de la tablette (3, 4) dans sa position d'utilisation provoquant une force d'appui sur la butée d'extrémité (5), caractérisé en ce que la plaque de tablette (4) est positionnée par rapport au palier de pivotement (2), réalisé exclusivement en tant que liaison pivotante, de façon que la résultante (G) d'une charge verticale appliquée à la tablette (3, 4) dans sa position d'utilisation passe, dans la direction d'assise, derrière l'axe de pivotement (12) et provoque la force d'appui sur la butée d'extrémité (5) et en ce que le palier de pivotement (2) présente une liaison de frottement qui, au moins dans la zone de la position d'utilisation, développe un couple de frottement suffisamment grand pour maintenir la tablette (3, 4) dans sa position d'utilisation.

2. Siège de passager selon la revendication 1, caractérisé en ce que la liaison de frottement développe un couple de frottement suffisamment grand pour maintenir la tablette dans chaque position de pivotement.

3. Siège de passager selon la revendication 1 ou la revendication 2, caractérisé en ce que la jambe de tablette (3) est incurvée en forme d'arc.

4. Siège de passager selon les revendications 1 à 3, caractérisé en ce qu'un arrêt à bille est prévu dans le palier de pivotement (2) pour la position d'effacement de la tablette (3, 4).

5. Siège de passager selon les revendications 1 à 4, caractérisé en ce qu'il constitue un siège double, que la jambe de tablette (3) est montée à pivot sur le châssis de siège (1) au milieu entre les deux surfaces d'assise et en ce que la plaque de tablette (4) de la tablette (3, 4) s'étend, en partant de la jambe de tablette (3), des deux côtés vers chaque siège de passager.

Fig.2.

M

12

4

Fig.1

16

15

14

1

13

G

S

4

3

5

2

11